# EUROPÄISCHE PATENTSCHRIFT

(11) **EP 2 825 623 B1**
(45) Veröffentlichungstag und Bekanntmachung des Hinweises auf die Patenterteilung: **01.02.2017**
(21) Anmeldenummer: 13709167.4
(22) Anmeldetag: 04.03.2013
(51) Int. Cl.: C11D 17/04, B65D 65/46, C08J 7/06

(54) **BESTÄUBTE, WASSERLÖSLICHE VERPACKUNG**
DUSTED, WATER-SOLUBLE PACKAGING
EMBALLAGE SOLUBLE DANS L'EAU AVEC SAUPOUDRAGE

(30) Priorität: 14.03.2012 DE 102012204014
(43) Veröffentlichungstag der Anmeldung: 21.01.2015
(73) Patentinhaber: Henkel AG & Co. KGaA, 40589 Düsseldorf (DE)
(72) Erfinder: SUNDER, Matthias, 40593 Düsseldorf (DE); SIEPMANN, Friedhelm, 45136 Essen (DE); STURM, Mario, 51371 Leverkusen (DE); MEIER, Frank, 40589 Düsseldorf (DE)
(86) Internationale Anmeldenummer: PCT/EP2013/054257
(87) Internationale Veröffentlichungsnummer: WO 2013/135512

(56) Entgegenhaltungen:
- WO-A1-89/04282
- WO-A2-02/26896
- US-A- 2 375 396
- US-A1- 2008 020 220

## Beschreibung

Die Erfindung betrifft eine bestäubte wasserlösliche Verpackung, die ein Mittel und eine wasserlösliche Umhüllung umfasst. Die Erfindung betrifft auch ein Verfahren zur Herstellung einer bestäubten wasserlöslichen Verpackung.

Wasch- oder Reinigungsmittel sind heute für den Verbraucher in vielfältigen Angebotsformen erhältlich. Neben Pulvern und Granulaten umfasst dieses Angebot beispielsweise auch Flüssigkeiten, Gele oder Portionspackungen (Tabletten oder gefüllte Beutel).

Insbesondere Portionspackungen in Form von wasserlöslichen Verpackungen mit flüssigen Wasch- oder Reinigungsmitteln werden immer beliebter, erfüllen sie einerseits den Wunsch des Verbrauchers nach vereinfachter Dosierung und andererseits bevorzugen immer mehr Verbraucher flüssige Wasch-oder Reinigungsmittel.

Solche wasserlöslichen Verpackungen können beispielsweise durch Verfahren des vertikalen Formfüllversiegelns (VFFS) oder Warmformverfahren hergestellt werden.

Das Warmformverfahren schließt im Allgemeinen das Formen einer ersten Lage aus einem wasserlöslichen Folienmaterial zum Bilden von Ausbuchtungen zum Aufnehmen einer Zusammensetzung darin, Einfüllen der Zusammensetzung in die Ausbuchtungen, Bedecken der mit der Zusammensetzung gefüllten Ausbuchtungen mit einer zweiten Lage aus einem wasserlöslichen Folienmaterial und Versiegeln der ersten und zweiten Lagen miteinander zumindest um die Ausbuchtungen herum ein. In einem darauffolgenden Verpackungsschritt wird eine Vielzahl an wasserlöslichen Verpackungen in einer Sekundärverpackung, beispielsweise einer Kunststoffbox oder einem Kunststoffbeutel, verpackt. Dazu werden die wasserlöslichen Verpackungen mittels geeigneter Förderanlagen zu einer Verpackungseinheit transportiert.

Wasserlösliche Verpackungen haben die Tendenz, aneinander zu haften, wenn eine Vielzahl derselben in enger Nachbarschaft über einen Zeitraum gelagert oder im Rahmen des Herstellungs- und Verpackungsprozesses transportiert wird. Die wasserlösliche Verpackungen weisen direkt nach der Herstellung oftmals eine Oberflächenklebrigkeit auf, die ihre Prozessfähigkeit im Verpackungsprozess dahingehend nachteilig beeinflussen kann, dass die wasserlöslichen Verpackungen schlechter gleiten oder, wenn sie in enger Nachbarschaft befördert werden, aneinander kleben und so vor der Verpackung in einer Sekundärverpackung nicht richtig gezählt werden können.

Zur Vermeidung dieser Probleme sind aus der EP 1498473 A1 und EP 1326929 A1 wasserlösliche Verpackungen bekannt, bei denen mindestens ein Teil einer freiliegenden Oberfläche der Verpackung mit einem Pulver bestäubt ist. Die eingesetzten Pulver umfassen Stärke, Zinkstearat, Calciumstearat und insbesondere Talkum,

Es besteht allerdings weiterhin Bedarf, die Prozessfähigkeit und die Lagerfähigkeit von wasserlöslichen Verpackungen zu verbessern.

Entsprechend war es eine Aufgabe der vorliegenden Erfindung, eine wasserlösliche Verpackung, die ein Mittel und eine wasserlösliche Umhüllung umfasst, bereit zu stellen, welche bei Lagerung oder Transport während des Herstell- und Verpackungsprozesses keine oder nur eine geringe Neigung aufweisen an weiteren wasserlöslichen Verpackungen zu haften und welche eine verbesserte Prozessfähigkeit aufweisen.

Diese Aufgabe wird gelöst durch eine wasserlösliche Verpackung, die ein Mittel und eine wasserlösliche Umhüllung enthält, wobei mindestens ein Teil einer freiliegenden Oberfläche der wasserlöslichen Verpackung mit Pulver bestäubt ist, welches ein Saccharid mit maximal 10 Monosaccharid-Einheiten enthält.

Es hat sich überraschenderweise gezeigt, dass die Verwendung von Saccharid-haltigen Pulvern als Bestäubungsmittel die Prozessfähigkeit der bestäubten wasserlöslichen Verpackungen deutlich verbessert.

In einer bevorzugten Ausführungsform der Erfindung ist das Saccharid mit maximal 10 Monosaccharid-Einheiten ausgewählt ist aus der Gruppe bestehend aus Monosacchariden, Disacchariden, Oligosacchariden aus 3 bis 10 Monosaccharid-Einheiten und Mischungen daraus. Insbesondere bevorzugt ist das Saccharid ausgewählt aus der Gruppe bestehend aus D-Ribose, D-Xylose, L-Arabinose, D-Glucose, D-Mannose, D-Galactose, D-Fructose, Sorbose, L-Fucose, L-Rhamnose, Saccharose, Raffinose, Trehalose, Xylooligosacchariden, Galactooligosacchariden, Lactose, Maltose, Cellobiose und Mischungen daraus. Diese Saccharide mit maximal 10 Monosaccharid-Einheiten lösen sich sehr gut in Wasser und hinterlassen nach der Wäsche keine Rückstände auf den gewaschenen Textilien. Außerdem sind diese Saccharide geruchsneutral.

Es ist insbesondere bevorzugt, dass das Saccharid mit maximal 10 Monosaccharid-Einheiten Lactose ist. Es hat sich gezeigt, dass mit Lactose bestäubte wasserlösliche Verpackungen im Herstellungs-und Verpackungsprozess verbesserte Transporteigenschaften aufweisen.

Es ist bevorzugt, dass das Saccharid mit maximal 10 Monosaccharid-Einheiten eine Partikelgröße D(v, 50) von 1 bis 100 µm und mehr bevorzugt eine Partikelgröße D(v, 50) von 5 bis 30 µm aufweist. Die Verwendung kleiner Partikelgrößen hat den Vorteil, dass die Bestäubung der wasserlöslichen Verpackung für den Verbraucher kaum oder gar nicht sichtbar ist.

Es ist ferner bevorzugt, dass das Pulver in einer Menge von 0,75 bis 8 mg/1000 mm² auf der freiliegenden Oberfläche der wasserlöslichen Verpackung vorliegt. Es hat sich gezeigt, dass bereits geringe Mengen an Saccharid ausreichen, um die Prozess- und Lagerfähigkeit von wasserlöslichen Verpackungen zu verbessern.

Es ist bevorzugt, dass die wasserlösliche Umhüllung Polyvinylalkohol oder ein Polyvinylalkoholcopolymer enthält. Wasserlösliche Umhüllungen, die Polyvinylalkohol oder ein Polyvinylalkoholcopolymer enthalten, weisen eine gute Stabilität bei einer ausreichend hohen Wasserlöslichkeit, insbesondere Kaltwasserlöslichkeit, auf.

Es ist insbesondere bevorzugt, dass das Mittel ein flüssiges Wasch- oder Reinigungsmittel ist. Wasserlösliche Verpackungen mit einem ein flüssiges Wasch- oder Reinigungsmittel erfüllen nicht nur den Wunsch des Wunsch des Verbrauchers nach vereinfachter Dosierung, sondern sie sind auch besser zu handhaben, als nicht portionierte flüssige Wasch- und Reinigungsmittel, da beispielsweise keine Tropfen am Flaschenrand zurückbleiben, die bei der anschließenden Lagerung der Flasche zu Rändern auf dem Untergrund oder zu unschönen Ablagerungen im Bereich des Verschlusses führen. Außerdem verbleiben keine Rückstände in der Einspülkammer.

Ein weiterer Gegenstand der Erfindung ist ein Verfahren zur Herstellung einer wasserlöslichen Verpackung, die ein Mittel und eine wasserlösliche Umhüllung enthält, dadurch gekennzeichnet, dass das Verfahren einen Schritt einer Beschichtung der wasserlöslichen Verpackung mit einem Pulver, welches ein Saccharid mit maximal 10 Monosaccharid-Einheiten enthält, umfasst.

Im Folgenden soll die Erfindung, unter anderem anhand von Beispielen, eingehender erläutert werden.

Gegenstand der Erfindung ist eine wasserlösliche Verpackung, die ein Mittel und eine wasserlösliche Umhüllung enthält und die mit einem Saccharid mit maximal 10 Monosaccharid-Einheiten bestäubt ist.

Eine wasserlösliche Verpackung enthält eine wasserlösliche Umhüllung. Die wasserlösliche Umhüllung wird vorzugsweise durch ein wasserlösliches Folienmaterial gebildet.

Die wasserlösliche Umhüllung wird vorzugsweise aus einem wasserlöslichen Folienmaterial ausgewählt aus der Gruppe, bestehend aus Polymeren oder Polymergemischen gebildet. Die Umhüllung kann aus einer oder aus zwei oder mehr Lagen aus dem wasserlöslichen Folienmaterial gebildet werden. Das wasserlösliche Folienmaterial der ersten Lage und der weiteren Lagen, falls vorhanden, kann gleich oder unterschiedlich sein.

Es ist bevorzugt, dass die wasserlösliche Umhüllung Polyvinylalkohol oder ein Polyvinylalkoholcopolymer enthält.

Geeignete wasserlösliche Folien zur Herstellung der wasserlöslichen Umhüllung basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung von Polyvinylalkohol geschieht üblicherweise durch Hydrolyse von Polyvinylacetat, da der direkte Syntheseweg nicht möglich ist. Ähnliches gilt für Polyvinylalkoholcopolymere, die aus entsprechend aus Polyvinylacetatcopolymeren hergestellt werden. Bevorzugt ist, wenn wenigstens eine Lage der wasserlöslichen Umhüllung einen Polyvinylalkohol umfasst, dessen Hydrolysegrad 70 bis 100 Mol-%, vorzugsweise 80 bis 90 Mol-%, besonders bevorzugt 81 bis 89 Mol-% und insbesondere 82 bis 88 Mol-% ausmacht.

Einem zur Herstellung der wasserlöslichen Umhüllung geeignetem Folienmaterial kann zusätzlich ein Polymer ausgewählt aus der Gruppe umfassend Acrylsäure-haltige Polymere, Polyacrylamide, Oxazolin-Polymere, Polystyrolsulfonate, Polyurethane, Polyester, Polyether Polymilchsäure oder Mischungen der vorstehenden Polymere zugesetzt sein.

Bevorzugte Polyvinylalkoholcopolymere umfassen neben Vinylalkohol Dicarbonsäuren als weitere Monomere. Geeignete Dicarbonsäure sind Itaconsäure, Malonsäure, Bernsteinsäure und Mischungen daraus, wobei Itaconsäure bevorzugt ist.

Ebenso bevorzugte Polyvinylalkoholcopolymere umfassen neben Vinylalkohol eine ethylenisch ungesättige Carbonsäure, deren Salz oder deren Ester. Besonders bevorzugt enthalten solche Polyvinylalkoholcopolymere neben Vinylalkohol Acrylsäure, Methacrylsäure, Acrylsäureester, Methacrylsäureester oder Mischungen daraus.

Geeignete wasserlösliche Folien zum Einsatz in den Umhüllungen der wasserlöslichen Verpackungen gemäß der Erfindung sind Folien, die von der Firma MonoSol LLC beispielsweise unter der Bezeichnung M8630, C8400 oder M8900 vertrieben werden. Andere geeignete Folien umfassen Folien mit der Bezeichnung Solublon® PT, Solublon® GA, Solublon® KC oder Solublon® KL von der Aicello Chemical Europe GmbH oder die Folien VF-HP von Kuraray.

Neben der wasserlöslichen Umhüllung weist die wasserlösliche Verpackung ein Mittel auf. Dieses Mittel kann beispielsweise ein Pulver, ein Granulat oder eine Flüssigkeit umfassen. Insbesondere bevorzugt ist das Mittel ein Wasch- oder Reinigungsmittel und noch mehr bevorzugt ein flüssiges Wasch- oder Reinigungsmittel.

Das Mittel enthält Inhaltsstoffe, die die strukturelle Integrität der wasserlöslichen Umhüllung nicht zerstören. Ist das eingesetzte Mittel ein flüssiges Wasch- oder Reinigungsmittel kann es einen oder mehrere Stoffe aus der Gruppe der Tenside, Gerüststoffe, Bleichmittel, Enzyme, Elektrolyte, pH-Stellmittel, Parfüme, Parfümträger, Fluoreszenzmittel, Farbstoffe, Hydrotope, Schauminhibitoren, Silikonöle, Antiredepositionsmittel, Vergrauungsinhibitoren, Einlaufverhinderer, Knitterschutzmittel, Farbübertragungsinhibitoren, antimikrobiellen Wirkstoffe, nicht-wässrigen Lösungsmittel, Germizide, Fungizide, Antioxidantien, Konservierungsmittel, Korrosionsinhibitoren, Antistatika, Bittermittel, Bügelhilfsmittel, Phobier- und Imprägniermittel, Haut-pflegende Wirkstoffe, Quell- und Schiebefestmittel, weichmachenden Komponenten sowie UV-Absorber enthalten.

Die Wasch- oder Reinigungsmittel sind flüssig. Die Wasch- oder Reinigungsmittel können Wasser enthalten, wobei der Gehalt an Wasser weniger als 10 Gew.-% und mehr bevorzugt weniger als 8 Gew.-%, jeweils bezogen auf das gesamte flüssige Wasch- oder Reinigungsmittel, beträgt.

Die wasserlösliche Verpackung ist mit einem Pulver bestäubt, welches Saccharid mit maximal 10 Monosaccharid-Einheiten umfasst. In einer besonders bevorzugten Ausführung ist wasserlösliche Verpackung mit einem Pulver bestäubt, welches aus einem oder mehreren Saccharid(en) mit maximal 10 Monosaccharid-Einheiten besteht.

Das Saccharid mit maximal 10 Monosaccharid-Einheiten ist vorzugsweise ausgewählt aus der Gruppe bestehend aus Monosacchariden, Disacchariden, Oligosaccharide aus 3 bis 10 Monosaccharid-Einheiten und Mischungen daraus. Insbesondere ist das Saccharid mit maximal 10 Monosaccharid-Einheiten ausgewählt aus der Gruppe bestehend aus D-Ribose, D-Xylose, L-Arabinose, D-Glucose, D-Mannose, D-Galactose, D-Fructose, Sorbose, L-Fucose, L-Rhamnose, Saccharose, Raffinose, Trehalose, Xylooligosacchariden, Galactooligosacchariden, Lactose, Maltose, Cellobiose und Mischungen daraus. Vorzugsweise enthält das Saccharid mit maximal 10 Monosaccharid-Einheiten ein Disaccharid.

In einer besonders bevorzugten Ausführungsform umfasst das Pulver Lactose und in einer ganz besonders bevorzugten Ausführungsform besteht das Pulver aus Lactose. Die Lactose wird vorzugsweise in Form des Monohydrats eingesetzt. Ein im Handel erhältliches und zur Bestäubung von wasserlöslichen Verpackungen geeignetes Lactosemonohydrat ist beispielsweise ESZET 15 der Firma KSL Staubtechnik.

Das Saccharid mit maximal 10 Monosaccharid-Einheiten weist vorzugsweise eine Partikelgröße D(v, 50) von 1 bis 100 µm und mehr bevorzugt eine Partikelgröße D(v, 50) von 5 bis 30 µm auf.

Die Partikelgröße D(v, 50) kann beispielsweise mithilfe eines Analysegeräts für Teilchengrößen "Mastersizer® 2000" von Malvern Instruments, Malvern, Großbritannien, der auf der Laserdiffraktion basiert, bestimmt werden. Dieses Gerät verwendet die Laserdiffraktionstechnik zur Bestimmung der Teilchengrößen und der Teilchengrößenverteilung feiner Pulver. Eine kleine Pulverprobe wird mit trockener Druckluft fluidisiert und durch ein Sieb in eine Messzelle transportiert, in der sie einem Laserstrahl ausgesetzt wird. Das Muster des gestreuten Laserlichts ist für eine bestimmte Teilchengrößenverteilung charakteristisch. Die Software von Malvern analysiert dieses Muster basierend auf kugelförmigen Teilchen und stellt das Resultat in Form eines Histogramms der Teilchendurchmesser dar.

Die ermittelten Ergebnisse können als volumetrische Durchmesser (D(v)) oder aber auch als numerische Durchmesser (D(n)) angegeben werden.

Die Partikelgröße D(v, 50) gibt die mittlere Partikelgröße an. Das bedeutet, dass 50% der Partikel kleiner sind als der angegebene Wert.

In einer Ausführungsform umfasst das Pulver neben dem Saccharid mit maximal 10 Monosaccharid-Einheiten einen Duftstoff. Ein mit wasserlöslichen Verpackungen verbundenes Problem ist, dass bei bedufteten Mitteln der Duft nicht durch die wasserlösliche Umhüllung dringt, sodass die wasserlösliche Verpackung keinen unverkennbaren Geruch oder aber den Geruch des Folienmaterials der wasserlöslichen Umhüllung aufweist, was häufig von Verbrauchern nicht akzeptiert wird. Dieses Problem kann durch die Verwendung von einem Pulver gelöst werden, das ein Saccharid mit maximal 10 Monosaccharid-Einheiten und einen Duftstoff umfasst.

Das Pulver kann auf beliebige geeignete Weise auf eine wasserlösliche Verpackung aufgebracht werden. Eine solche Möglichkeit ist das Lösen oder Suspendieren des Pulvers in einem nicht wässrigen Lösungsmittel, das anschließend zerstäubt und auf die wasserlösliche Verpackung gesprüht wird. Bei diesem Verfahren entsteht jedoch eine erhebliche Menge Lösungsmittel, die inhärent gefährlich sein kann und wieder gewonnen und kondensiert werden muss.

In einem alternativen Verfahren wird das Pulver mittels rotierender Bürsten, die mit dem Pulver in Berührung sind, auf die wasserlösliche Verpackung aufgetragen. Ein anderes Verfahren bedient sich der Schwerkraft, um die wasserlösliche Verpackungen über eine eingepuderte Oberfläche gleiten zu lassen. Die Pulverübertragung und die Bewegung der wasserlöslichen Verpackungen kann durch Vibrieren der Oberfläche verbessert werden. Diese Verfahren haben den Vorteil, dass sie nicht auf Lösungsmittel angewiesen sind.

In einem anderen Verfahren wird das Pulver unter Verwendung einer Wirbelkammer in Luft fluidisiert. Das fluidisierte Pulver wird dann mit den wasserlöslichen Verpackungen in Berührung gebracht. Dies kann mittels pneumatischer Förderung des fluidisierten Pulvers erfolgen, wobei der Pulverstrom auf eine oder mehrere wasserlösliche Verpackungen gerichtet wird.

In einem weiteren Pulverbeschichtungsverfahren werden eine oder mehrere ortsfeste Pulverspritzpistolen verwendet, um den Pulverstrom auf die wasserlöslichen Verpackungen zu richten, die mittels eines Bandförderers durch die Beschichtungszone transportiert werden.

In einer Ausführungsform dieses Verfahrens wird die Anziehung zwischen dem Pulver und der wasserlöslichen Verpackung mithilfe elektrostatischer Kräfte erhöht. Ein Pulver kann wirksam geladen werden, wenn eine Elektrode in die Pulverspritzpistole eingebaut ist.

Es ist bevorzugt, dass das Pulver nach dem Bestäuben in einer Menge von 0,75 bis 8 mg/1000 mm² auf der freiliegenden Oberfläche einer wasserlöslichen Verpackung vorliegt.

Die wasserlösliche Verpackung, umfassend das Mittel und die wasserlösliche Umhüllung, kann eine oder mehr Kammern aufweisen. Die wasserlöslichen Verpackungen mit einer Kammer können eine im Wesentlichen formstabile kugelförmige und kissenförmige Ausgestaltung mit einer kreisförmigen, elliptischen, quadratischen oder rechteckigen Grundform aufweisen. Das Mittel kann in einer oder mehreren Kammern, falls vorhanden, der wasserlöslichen Umhüllung enthalten sein.

In einer bevorzugten Ausführungsform weist die wasserlösliche Verpackung zwei Kammern auf. In dieser Ausführungsform enthält die erste Kammer ein flüssiges Mittel und die zweite Kammer ein festes oder ein flüssiges Mittel. In einer ganz besonders bevorzugten Ausführungsform enthält die erste Kammer ein flüssiges Wasch- oder Reinigungsmittel und die zweite Kammer ein festes oder ein flüssiges Wasch- oder Reinigungsmittel.

Die Mittel, die in den unterschiedlichen Kammern einer wasserlöslichen Verpackung mit zwei oder mehr Kammern enthalten sind, können dieselbe Zusammensetzung aufweisen. Vorzugsweise weisen die Mittel in einer wasserlöslichen Verpackung mit mindestens zwei Kammern Zusammensetzungen auf, die sich mindestens in einem Inhaltsstoff oder sich mindestens im Gehalt eines Inhaltsstoffes unterscheiden.

Wasserlösliche Verpackungen mit mindestens zwei Kammern weisen den Vorteil auf, dass nicht kompatible Inhaltsstoffe in getrennten Kammern vorhanden sein können. Ein weiterer Vorteil ergibt sich bei Suspension mit festen und flüssigen Inhaltsstoffen, welche oftmals vom Anwender der wasserlöslichen Verpackung als wenig ästhetisch und/oder fehlerhaft angesehen werden. In einem solchen Fall können die festen bzw. unlöslichen Inhaltsstoffe in einer separaten Kammer der wasserlöslichen Verpackung enthalten sein.

### Beispiele

Es wurden flüssige Wasch- oder Reinigungsmittel mittels üblicher und bekannter Methoden und Verfahren hergestellt. In der folgenden Tabelle 1 sind die Zusammensetzungen von zwei flüssigen Wasch- oder Reinigungsmitteln E1 und E2 gezeigt.

**Tabelle 1: Flüssige Wasch- oder Reinigungsmittel E1 und E2 [alle Mengen sind in Gew.-% Aktivstoff, bezogen auf die Zusammensetzung, angegeben]**

| Inhaltsstoffe | E1 | E2 |
|---|---|---|
| C₁₀-C₁₃-Alkylbenzolsulfonsäure | 21 | 21 |
| C₁₃-C₁₅-Oxo-Alkohol mit 8 EO | 22,5 | -- |
| C₁₃-C₁₅-Oxo-Alkohol mit 7 EO | -- | 22,5 |
| C₁₂₋₁₈-Fettalkohol mit 7 EO | -- | -- |
| C₁₂₋₁₈-Fettalkohol mit 3 EO | -- | -- |
| C₁₂₋₁₈-Fettsäure | 17,5 | 17,5 |
| Glycerin | 13 | 13 |
| 1,2-Propandiol | 13,5 | 13,5 |
| Ethanol | 3,26 | 3,26 |
| Phosphonat | 0,3 | 0,3 |
| Monoethanolamin | 6,4 | 6,4 |
| Farbstoffe, Enzyme (Cellulase, Amylase & Protease), optischer Aufheller, Parfüm | 0,8 | 0,8 |
| Wasser | 1,74 | 1,74 |

Zur Herstellung von wasserlöslichen Verpackungen mit den flüssigen Wasch- oder Reinigungsmitteln E1 und E2 wurde eine Folie vom Typ M 8630 (ex Monosol) mit einer Dicke von 76 µm zum Ausbilden einer Ausbuchtung mittels Vakuum in eine Mulde gezogen. Anschließend wurde die Ausbuchtung mit 30 ml eines der flüssigen Wasch- oder Reinigungsmittel E1 oder E2 befüllt. Nach Bedecken der mit dem Mittel befüllten Ausbuchtungen mit einer zweiten Lage einer Folie vom Typ M 8630 wurden die erste und zweite Lage miteinander versiegelt. Die Siegelungstemperatur betrug 150 °C und die Siegelungsdauer 1,1 Sekunden. Anschließend wurden die wasserlöslichen Verpackungen mittels eines Bepuderungsapparats der Firma PEKUTECH mit Lactosemonohydrat bestäubt. Die Partikelgröße D(v, 50) des Lactosemonohydrats betrug 20 µm. Für Vergleichsversuche wurden auch wasserlösliche Verpackungen mit Talkum (108070 PARTECK® LUB der Firma Merck) bestäubt.

Zur Bestimmung der Transporteigenschaften wurde die Wanderungsgeschwindigkeit der bestäubten wasserlöslichen Verpackungen mit dem flüssigen Wasch- oder Reinigungsmittel E1 auf einer Vibrationsapparatur (KF 12-2, Firma AViTEQ Vibrationstechnik) bestimmt. Als Wert für die Gleitfähigkeit der wasserlöslichen Verpackungen wurde die Zeit in Sekunden gemessen, welche die wasserlöslichen Verpackungen benötigen, um eine Wegstrecke von 75 cm zu durchlaufen. Die Vibrationsfläche aus Edelstahl (Werkstoff-Nummer 1.4571) war um 7% geneigt und wurde mit einer Frequenz von 2100 Hz betrieben. Es wurde jeweils der Mittelwert aus 8 Messungen bestimmt.

Die Wanderungsgeschwindigkeit wurde von frisch bestäubten wasserlöslichen Verpackungen und nach 7 Tagen Lagerung bestimmt.

**Tabelle 2: Wanderunqsqeschwindiqkeit von wasserlöslichen Verpackunqen**

| Pulver | Beladung (mg/wV*) | Zeit [s] frisch | Zeit [s] 7 Tage |
|---|---|---|---|
| ohne | | 32,4 | 32,5 |
| Talkum | 11,6 | 30,5 | 50,1 |
| Lactosemonohydrat | 10,1 | 26,9 | 31,4 |
| Lactosemonohydrat | 15,9 | 24,8 | 28,1 |

| | | | |
|---|---|---|---|
| * wV = wasserlösliche Verpackung | | | |

Die Ergebnisse in Tabelle 2 zeigen deutlich, dass mit Lactose bestäubte wasserlösliche Verpackungen bessere Transporteigenschaften aufweisen, als mit Talkum bestäubte wasserlösliche Verpackungen. Es zeigte sich auch, dass mit Talkum bestäubte wasserlösliche Verpackungen nur geringfügig bessere Gleiteigenschaften aufweisen als gar nicht bestäubte wasserlösliche Verpackungen. Besonders auffällig war zudem, dass sich bei Talkum-bestäubten wasserlöslichen Verpackungen deren Wanderungsgeschwindigkeit nach 7 Tagen deutlich verlangsamte.

Nach 4, 8 und 12 Wochen Lagerzeit der Lactose-bestäubten wasserlöslichen Verpackungen mit den Wasch- oder Reinigungsmitteln E1 oder E2 unter verschiedenen klimatischen Bedingungen konnte keinerlei An- oder Auflösung der wasserlöslichen Umhüllung beobachtet werden. Zudem konnten keine Poren oder Löcher, die ebenfalls zum Produktaustritt oder Leckagen führen würden, festgestellt werden.

Lactose-bestäubte wasserlösliche Verpackungen mit den Wasch- oder Reinigungsmitteln E1 oder E2 lösten sich in Waschgängen bei Temperaturen, die im Bereich von 20 bis 95 °C lagen, rückstandslos auf und zeigten eine sehr gute Reinigungsleistung.

Die mit Lactose bestäubten wasserlöslichen Verpackungen mit den Wasch- oder Reinigungsmitteln E1 oder E2 zeigten auch nach 12 Wochen Lagerung in einem Kunststoffbeutel aus Polyethylenterephthalat-Polypropylen-Folienverbund (16 wasserlösliche Verpackungen pro Beutel) keinerlei Tendenz, aneinander zu haften. Im Gegensatz dazu zeigten die mit Talkum bestäubten, wasserlöslichen Verpackungen eine leichte Tendenz aneinander zu haften.

In der folgenden Tabelle 3 sind die Zusammensetzungen von zwei weiteren Wasch- oder Reinigungsmittels E3 und E4, die in erfindungsgemäßen wasserlöslichen Verpackungen eingesetzt werden, gezeigt.

**Tabelle 3: Flüssige Wasch- oder Reinigungsmittel E3 und E4 [alle Mengen sind in Gew.-% Aktivstoff, bezogen auf die Zusammensetzung, angegeben]**

| Inhaltsstoffe | E3 | E4 |
|---|---|---|
| Kaliumtripolyphosphat | 21 | -- |
| Glutamindiessigsäure, Na-Salz | -- | 21 |
| Natriumcitrat | 4 | 4 |
| Hydroxymischether | 2 | 2 |
| Glycerin | 27 | 27 |
| 1,2-Propandiol | 10 | 10 |
| Sulfopolymer | 9 | 9 |
| Phosphonat | 2,5 | 2,5 |
| Monoethanolamin | 3,5 | 3,5 |
| Farbstoffe, Enzyme & Parfüm | 3 | 3 |
| Wasser | 18 | 18 |

## Patentansprüche

1. Wasserlösliche Verpackung, die ein Mittel und eine wasserlösliche Umhüllung enthält, wobei mindestens ein Teil einer freiliegenden Oberfläche der wasserlöslichen Verpackung mit Pulver bestäubt ist, **dadurch gekennzeichnet,**
**dass** das Pulver ein Saccharid mit maximal 10 Monosaccharid-Einheiten enthält.

2. Wasserlösliche Verpackung gemäß Anspruch 1, **dadurch gekennzeichnet, dass** das Saccharid mit maximal 10 Monosaccharid-Einheiten ausgewählt ist aus der Gruppe bestehend aus Monosacchariden, Disacchariden, Oligosacchariden aus 3 bis 10 Monosaccharid-Einheiten und Mischungen daraus.

3. Wasserlösliche Verpackung gemäß Anspruch 1 oder Anspruch 2, **dadurch gekennzeichnet, dass** das Saccharid ausgewählt ist aus der Gruppe bestehend aus D-Ribose, D-Xylose, L-Arabinose, D-Glucose, D-Mannose, D-Galactose, D-Fructose, Sorbose, L-Fucose, L-Rhamnose, Saccharose, Raffinose, Trehalose, Xylooligosacchariden, Galactooligosacchariden, Lactose, Maltose, Cellobiose und Mischungen daraus.

4. Wasserlösliche Verpackung gemäß Anspruch 3, **dadurch gekennzeichnet, dass** das Saccharid mit maximal 10 Monosaccharid-Einheiten Lactose enthält.

5. Wasserlösliche Verpackung gemäß einem Ansprüche 1 bis 4, **dadurch gekennzeichnet, dass** das Saccharid eine Partikelgröße D(v, 50) von 1 bis 100 µm und mehr bevorzugt eine Partikelgröße D(v, 50) von 5 bis 30 µm aufweist.

6. Wasserlösliche Verpackung gemäß einem Ansprüche 1 bis 5, **dadurch gekennzeichnet, dass** das Pulver in einer Menge von 0,75 bis 8 mg/1000 mm² auf der freiliegenden Oberfläche der wasserlöslichen Verpackung vorliegt.

7. Wasserlösliche Verpackung gemäß einem Ansprüche 1 bis 6, **dadurch gekennzeichnet, dass** die wasserlösliche Umhüllung Polyvinylalkohol oder ein Polyvinylalkoholcopolymer enthält.

8. Wasserlösliche Verpackung gemäß einem Ansprüche 1 bis 7, **dadurch gekennzeichnet, dass** das Mittel ein flüssiges Wasch- oder Reinigungsmittel ist.

9. Verfahren zur Herstellung einer wasserlöslichen Verpackung, die ein Mittel und eine wasserlösliche Umhüllung enthält, **dadurch gekennzeichnet, dass** das Verfahren einen Schritt einer Beschichtung der wasserlöslichen Verpackung mit einem Pulver, welches ein Saccharid mit maximal 10 Monosaccharid-Einheiten enthält, umfasst.

## Claims

1. A water-soluble package which contains an agent and a water-soluble covering, wherein at least part of an exposed surface of the water-soluble package is dusted with powder, **characterized in that** the powder contains a saccharide with at most 10 monosaccharide units.

2. The water-soluble package according to claim 1, **characterized in that** the saccharide with at most 10 monosaccharide units is selected from the group consisting of monosaccharides, disaccharides, oligosaccharides of 3 to 10 monosaccharide units and mixtures thereof.

3. The water-soluble package according to claim 1 or claim 2, **characterized in that** the saccharide is selected from the group consisting of D-ribose, D-xylose, L-arabinose, D-glucose, D-mannose, D-galactose, D-fructose, sorbose, L-fucose, L-rhamnose, sucrose, raffinose, trehalose, xylooligosaccharides, galactooligosaccharides, lactose, maltose, cellobiose and mixtures thereof.

4. The water-soluble package according to claim 3, **characterized in that** the saccharide with at most 10 monosaccharide units contains lactose.

5. The water-soluble package according to one of claims 1 to 4, **characterized in that** the saccharide has a particle size D(v, 50) of 1 to 100 µm and more preferably a particle size D(v, 50) of 5 to 30 µm.

6. The water-soluble package according to one of claims 1 to 5, **characterized in that** the powder is present on the exposed surface of the water-soluble package in a quantity of 0.75 to 8 mg/1000 mm².

7. The water-soluble package according to one of claims 1 to 6, **characterized in that** the water-soluble covering contains polyvinyl alcohol or a polyvinyl alcohol copolymer.

8. The water-soluble package according to one of claims 1 to 7, **characterized in that** the agent is a liquid washing or cleaning agent.

9. A method for producing a water-soluble package which contains an agent and a water-soluble covering, **characterized in that** the method comprises a step of coating the water-soluble package with a powder which contains a saccharide with at most 10 monosaccharide units.

## Revendications

1. Emballage soluble dans l'eau qui contient un agent et une enveloppe soluble dans l'eau, au moins une partie d'une surface exposée de l'emballage soluble dans l'eau étant saupoudrée, **caractérisé en ce que** la poudre contient un saccharide comportant maximum 10 motifs de monosaccharide.

2. Emballage soluble dans l'eau selon la revendication 1, **caractérisé en ce que** le saccharide comportant maximum 10 motifs de monosaccharide est choisi dans le groupe comprenant des monosaccharides, disaccharides, oligosaccharides constitués de 3 à 10 motifs de monosaccharide, et des mélanges de ceux-ci.

3. Emballage soluble dans l'eau selon la revendication 1 ou la revendication 2, **caractérisé en ce que** le saccharide est choisi dans le groupe comprenant le D-ribose, le D-xylose, le L-arabinose, le D-glucose, le D-mannose, le D-galactose, le D-fructose, le sorbose, le L-fucose, le L-rhamnose, le saccharose, le raffinose, le tréhalose, des xylo-oligosaccharides, des galactooligosaccharides, le lactose, le maltose, le cellobiose, et des mélanges de ceux-ci.

4. Emballage soluble dans l'eau selon la revendication 3, **caractérisé en ce que** le saccharide comportant maximum 10 motifs de monosaccharide contient du lactose.

5. Emballage soluble dans l'eau selon une des revendications 1 à 4, **caractérisé en ce que** le saccharide possède une taille de particules D(v, 50) allant de 1 à 100 µm et de préférence une taille de particules D(v, 50) allant de 5 à 30 µm.

6. Emballage soluble dans l'eau selon une des revendications 1 à 5, **caractérisé en ce que** la poudre se trouve dans une quantité allant de 0,75 à 8 mg/1000 mm² sur la surface exposée de l'emballage soluble dans l'eau.

7. Emballage soluble dans l'eau selon une des revendications 1 à 6, **caractérisé en ce que** l'enveloppe soluble dans l'eau contient un alcool polyvinylique ou un copolymère d'alcool polyvinylique.

8. Emballage soluble dans l'eau selon une des revendications 1 à 7, **caractérisé en ce que** l'agent est un agent lavant ou nettoyant liquide.

9. Procédé de fabrication d'un emballage soluble dans l'eau qui contient un agent et une enveloppe soluble dans l'eau, **caractérisé en ce que** le procédé comprend une étape de revêtement de l'emballage soluble dans l'eau à l'aide d'une poudre, laquelle contient un saccharide comportant maximum 10 motifs de monosaccharide.
